# EUROPEAN PATENT SPECIFICATION

(11) **EP 2 157 010 B1**
(45) Date of publication and mention of the grant of the patent: **15.01.2014**
(21) Application number: 09010413.4
(22) Date of filing: 12.08.2009
(51) Int. Cl.: B62K 19/46, B62K 11/10

(54) **Motorcycle**
Motorrad
Motocyclette

(30) Priority: 19.08.2008 JP 2008210236
(43) Date of publication of application: 24.02.2010
(73) Proprietor: Yamaha Hatsudoki Kabushiki Kaisha, Shizuoka-ken Shizuoka 438-8501 (JP)
(72) Inventor: Akao, Takuya, Iwata-shi Shizuoka-ken 438-8501 (JP)
(74) Representative: Zimmermann, Tankred Klaus

(56) References cited:
- EP-A2- 1 055 594
- EP-A2- 1 108 644
- EP-A2- 1 510 673
- EP-B1- 1 232 088
- WO-A1-2004/078568
- JP-A- 10 067 362
- US-A1- 2006 065 458
- US-B1- 6 267 700

## Description

### TECHNICAL FIELD

The present invention relates to a motorcycle, and more particularly to a scooter-type motorcycle.

### BACKGROUND ART

A scooter-type motorcycle has a seat, a cover member extending downward from the seat, and a footboard extending forward from the lower end of the cover member. The footboard has a substantially flat shape and a rider can place his/her feet on the footboard and drive.

There are motorcycles such as that described above, in which a power unit and a storage box are arranged below the seat (see JP 10-067362 A1). The power unit has an engine and a transmission mechanism. The engine is connected to the vehicle frame so as to be capable of pivoting in the vertical direction. The transmission mechanism is integrally provided with the engine, and the rear wheel is linked to the transmission mechanism. Therefore, the power unit can vertically pivot together with the rear wheel about a connection portion between the engine and the vehicle frame.

EP 1 510 673 A1 describes a motorcycle according to the preamble of claim 1, including a swing arm vertically swingably mounted to a vehicle body frame, an engine mounted on the vehicle body frame (110), an a storage box disposed behind the engine above a rear wheel.

### SUMMARY OF THE INVENTION

An object of the present invention is to provide a motorcycle in which a large-capacity storage box can be provided under the seat and both of running characteristics and mounting/dismounting characteristics can be maintained.

This object is achieved by a motorcycle of claim 1.

The outside diameter of the rear wheel of a scooter-type motorcycle such as that described above in JP 10-067362 A1 is ordinarily about 10 to 12 inches, or, if larger, 13 inches. However, in recent years, there is a preference for rear wheels having an outside diameter of 14 inches or more. This is because good running performance can be achieved by using a rear wheel with such a large diameter. On the other hand, this is not desirable in the sense that a larger wheelbase may reduce the turning characteristics. Therefore, it is preferred that the wheelbase is kept from becoming larger even if the diameter of the rear wheel is increased. In the case that the outside diameter of the rear wheel is 14 inches, for example, it is preferred that the wheelbase is 1300 millimeters or less. However, in this case, it is difficult to arrange a large-capacity storage box under the seat in a conventional motorcycle such as that described above.

A scooter-type motorcycle is provided with a substantially flat footboard as described above. In cases in which it is difficult to provide a large-capacity storage box below the seat as described above, a storage space can be provided below the footboard by forming a portion of the footboard in a bulging shape. However, in this case, the mounting/dismounting characteristics are liable to be compromised by the bulge provided on the footboard.

The motorcycle according to the present invention is a motorcycle comprising a seat, a footboard, a cover member, a vehicle frame, a front wheel, and a rear wheel having a wheel outside diameter of 35,5 cm (14 inches) or more, an engine, a power transmission unit, a storage box, and an air cleaner. The footboard is disposed forward of and below the seat and has a flat shape or a bulging shape with a height of 5 cm or less. The cover member extends downward from the seat and covers an area between the seat and the footboard. The vehicle frame supports the seat, the footboard, and the cover member. The engine is disposed below the seat and secured to the vehicle frame. The power transmission unit is capable of pivoting in relation to the engine and the vehicle frame and is provided with a continuously variable transmission for shifting gears and transmitting drive power from the engine to the rear wheel. The storage box is disposed below the seat and above the center about which the power transmission unit pivots in relation to the engine. The air cleaner is connected to the engine. In accordance with a first aspect the air cleaner is disposed below the seat in alignment with the storage box in the longitudinal direction. In accordance with a first aspect the air cleaner is disposed between the storage box and the engine. An extension of a cylinder axis line of the engine is disposed so as to pass over the front wheel as viewed from the side.

With the motorcycle according to the present invention, a large-capacity storage box can be provided under the seat and both running characteristics and mounting/dismounting characteristics can be maintained.

### BRIEF DESCRIPTION OF THE DRAWINGS

FIG. 1 is a side view of a motorcycle;
FIG. 2 is a side view showing the internal structure of the motorcycle according to the first embodiment;
FIG. 3 is a side view showing the internal structure of the motorcycle according to the first embodiment;
FIG. 4 is a left side view of the power unit;
FIG. 5 is a right side view of the power unit;
FIG. 6 is a perspective view of the first side frame and the second side frame;
FIG. 7 is a plan view of the first side frame and the second side frame;
FIG. 8 is a side view showing the internal structure of the motorcycle according to the first embodiment;
FIG. 9 is a plan view showing the internal structure of the motorcycle according to the first embodiment;
FIG. 10 is a front view showing the internal structure of the motorcycle according to the first embodiment;
FIG. 11 is a side view showing the internal structure of the motorcycle according to the second embodiment;
FIG. 12 is a front view showing the internal structure of the motorcycle according to the second embodiment;
FIG. 13 is a side view showing the internal structure of the motorcycle according to the third embodiment;
FIG. 14 is a plan view showing the internal structure of the motorcycle according to the third embodiment; and
FIG. 15 is a side view showing the internal structure of the motorcycle according to the fourth embodiment.

### DESCRIPTION OF EMBODIMENTS

The motorcycle according to the embodiments of the present invention is described below with reference to the drawings.

### <First embodiment>

### [External configuration]

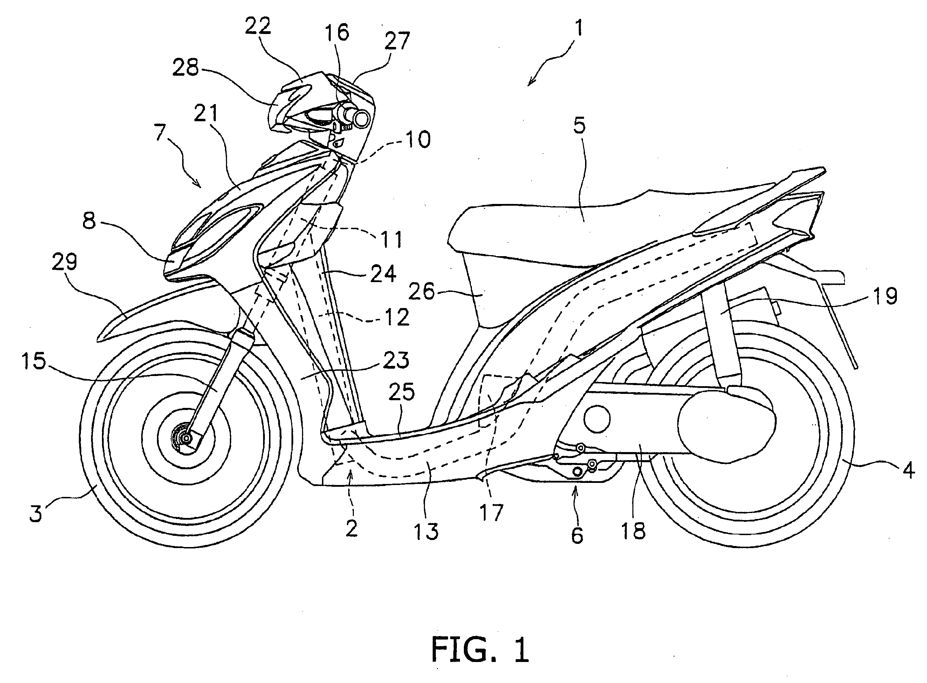

FIG. 1 is a side view of a motorcycle 1 according to the first embodiment of the present invention.

The motorcycle 1 is a scooter-type motorcycle and comprises a vehicle frame 2, a front wheel 3, a rear wheel 4, a seat 5, a power unit 6, and a body cover 7.

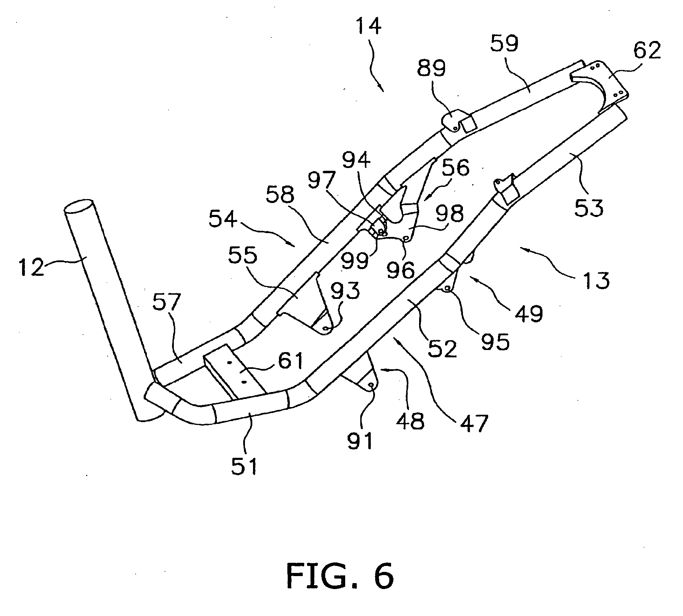

The vehicle frame 2 supports the seat 5, the power unit 6, the body cover 7, and the like. The vehicle frame 2 has a head pipe 11, a front frame 12, and a first side frame 13 and a second side frame 14 (see FIG. 6), which constitute a left and right pair. In FIG. 1, only the first side frame 13 positioned on the left side of the pair of side frames 13, 14 is shown. In the description below, the right side and the left side indicate the left side and the right as viewed from a driver seated on the seat.

A steering shaft 10 is inserted into the head pipe 11. The steering shaft 10 is rotatably supported on the head pipe 11. A front fork 15 is mounted on the lower end of the steering shaft 10. The front wheel 3 is rotatably supported at the lower end portion of the front fork 15. A handle 16 is secured to the upper end portion of the steering shaft 10.

The front frame 12 is connected to the head pipe 11 and extends from the head pipe 11 diagonally downward in the rearward direction. The front frame 12 is disposed in the front side of a footboard 25 described below.

The first side frame 13 and the second side frame 14 connect to the lower end part of the front frame 12, pass below the footboard 25 described below, and extend rearward and upward toward the seat 5.

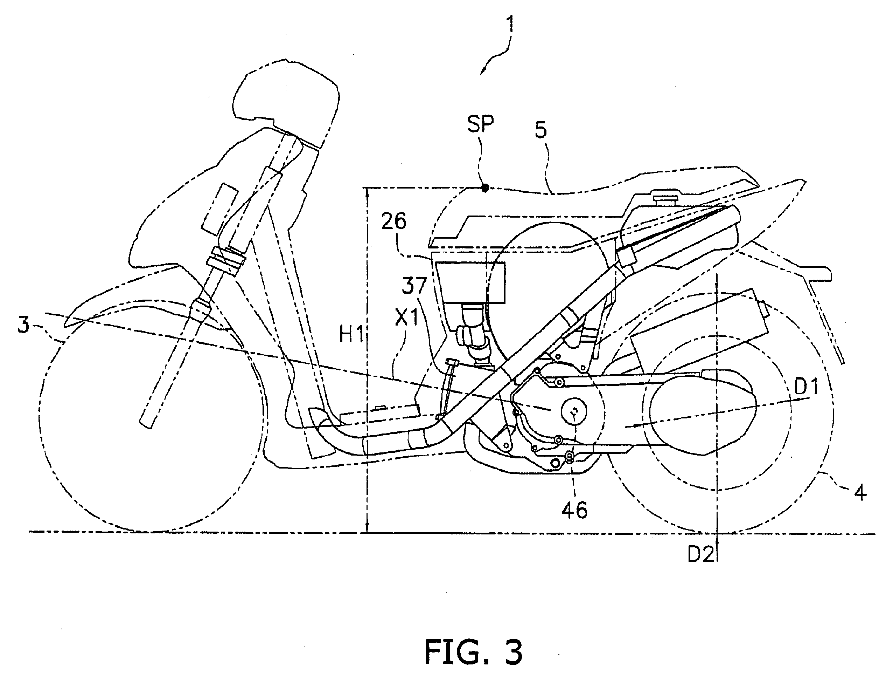

The power unit 6 is supported by the first side frame 13 and the second side frame 14, and has an engine 17 and a power transmission unit 18 for transmitting power from the engine 17 to the rear wheel 4. The rear wheel 4 is rotatably supported by the rear end part of the power transmission unit 18. A rear cushion unit 19 is provided between the power transmission unit 18 and the side frames 13, 14. The rear wheel 4 has a large diameter, as shown in FIG. 3, and the wheel outside diameter D1 is 14 inches. A wheelbase is 1300 millimeters or less. Characteristically, the wheelbase is 1250 to 1300 millimeters. The ratio of the outside diameter D2 of the rear wheel 4 to the seat height H1 of the seating position SP (see EC specification) of the seat 5 is 65% or higher. In the present embodiment, the front wheel 3 is the same size as the rear wheel 4, but the sizes may be different.

The body cover 7 is a member made of resin and covers the vehicle frame 2 and the handle 16. The body cover 7 has a front cover 21, a handle cover 22, an inner fender 23, a leg shield 24, a footboard 25, a side cover 26, and the like.

The front cover 21 is disposed on the front side of the head pipe 11. A lamp device 8 is mounted in the front cover 21.

The handle cover 22 is disposed above the front cover 21 and covers the handle 16. An instrument panel 27 having a fuel gauge, a speedometer, and the like is disposed on the upper surface of the handle cover 22. A headlight 28 is mounted on the front surface of the handle cover 22.

The inner fender 23 is disposed below the front cover 21. The inner fender 23 is disposed behind the front wheel 3 and covers the rear of the front wheel 3. A front fender 29 is disposed above the front wheel 3 and covers the area above of the front wheel 3, as shown in FIG. 1.

The leg shield 24 is disposed behind the front cover 21 and the inner fender 23, and covers the area behind the front frame 12.

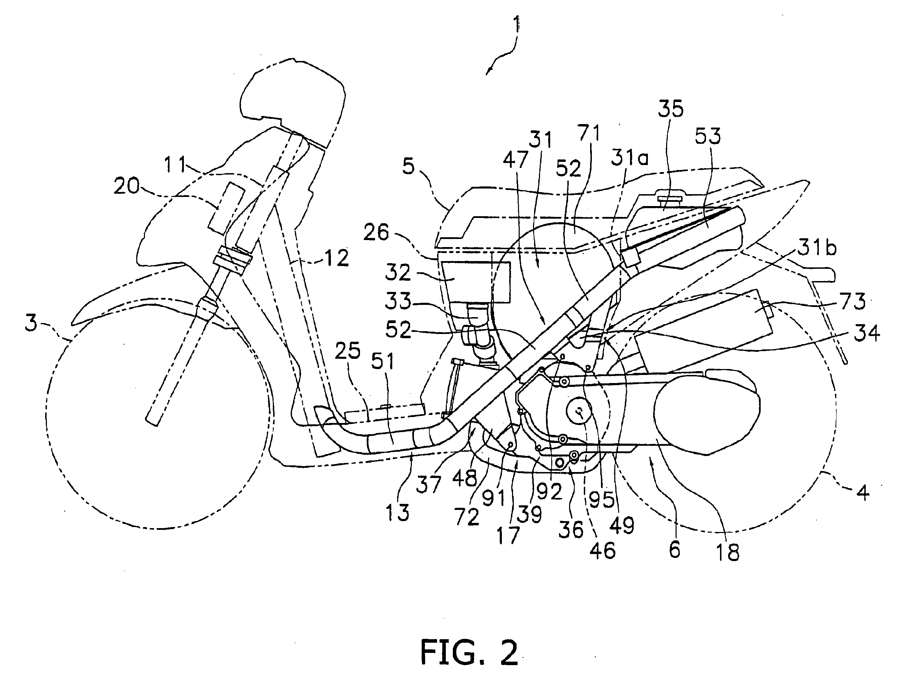

The footboard 25 is a portion on which the rider's feet are placed, and is disposed in front of and below the seat 5. The footboard 25 is provided across the transverse direction of the vehicle body, and the upper surface of the footboard 25 is formed in a substantially flat manner in the transverse direction of the vehicle body. The footboard 25 is connected to the lower end of the leg shield 24. The footboard 25 is positioned further below the bottom part of the storage box 31 described below (see FIG. 2).

The side cover 26 (cover member) extends downward from the seat 5 and covers the area between the seat 5 and the footboard 25. The side cover 26 is provided so as to enclose the periphery below the seat 5. Accordingly, the side cover 26 has a portion extending downward from the front portion of the seat 5 to the rear end portion of the footboard 25, and a portion that extends downward from both lateral parts of the seat 5. Here, the side cover 26 extends downward from the front end of the seat 5, but may be disposed so as to extend downward from a position further rearward of the front end of the seat 5. In other words, the front end of the seat 5 may be positioned further forward of the side cover 26.

### [Internal configuration]

Next, the internal configuration of the motorcycle 1 will be described. FIG. 2 is a side view showing in particular the configuration below the seat 5 of the structure of the motorcycle 1. The power unit 6, the storage box 31, an air cleaner 32, an intake channel 33, a battery 34, and a fuel tank 35 are disposed below the seat 5 as shown in FIG. 2.

The power unit 6 has the engine 17 and the power transmission unit 18, as described above.

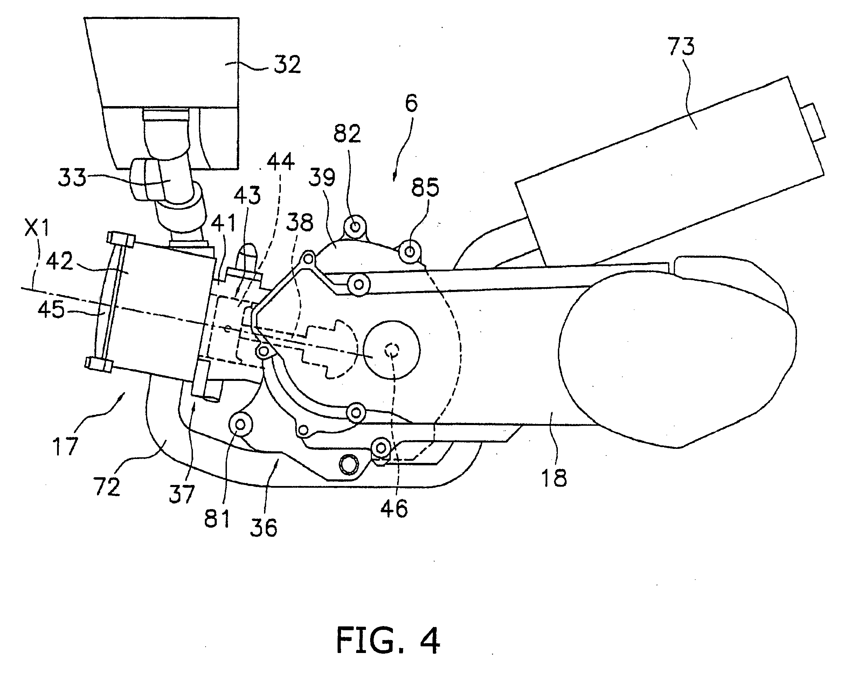

The engine 17 is a water-cooled four-stroke engine, and is connected to a radiator 20 by cooling lines (not shown). The engine 17 is disposed rearward of the side cover 26 and below the seat 5, and is secured to the first side frame 13 and the second side frame 14. The engine 17 has a crank section 36 and a cylinder 37. The crank section 36 has a crankshaft 38, and a crankcase 39 for internally accommodating the crankshaft 38, as shown in FIG. 4. The cylinder 37 is disposed forward of the crank section 36, and has a cylinder block 41 and a cylinder head 42. The cylinder block 41 is mounted on the front portion of the crankcase 39 using bolts or other securing means. The cylinder block 41 includes a cylinder body 43 and has a piston 44 connected to the crankshaft 38 disposed in a cylinder bore. The cylinder head 42 is secured to the front section of the cylinder block 41. The cylinder head 42 internally forms a combustion chamber together with the cylinder block 41 and the piston 44. A head cover 45 is mounted on the front portion of the cylinder head 42 using bolts or other securing means. The engine 17 is disposed so that the cylinder axis line of the cylinder 37 is substantially horizontal and is disposed so that an extension line X1 of the cylinder axis line passes over the front wheel 3 as viewed from the side, as shown in FIG. 3.

The securing structure between the engine 17 and the vehicle frame 2 is described next.

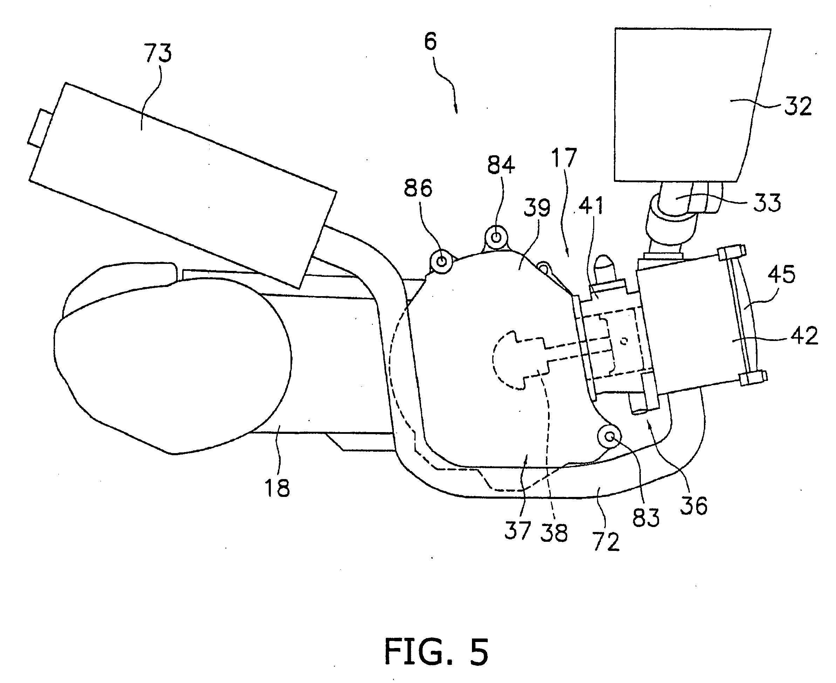

A plurality of securing portions for securing the engine 17 to the first side frame 13 and the second side frame 14 are provided on the engine 17, and the engine 17 is non-pivotably secured to the first side frame 13 and the second side frame 14. Specifically, first to sixth engine-side securing portions 81 to 86 are provided on the engine 17, as shown in FIGS. 4 and 5. FIG. 4 is a left side view of the power unit 6, and FIG. 5 is a right side view of the power unit 6;

A first engine-side securing portion 81, a second engine-side securing portion 82, and a fifth engine-side securing portion 85 are provided on the left side surface of the crankcase 39 and are portions secured to the first side frame 13, as shown in FIG. 4. The first engine-side securing portion 81 is disposed below and forward of the crankshaft 38, the second engine-side securing portion 82 is disposed above and rearward of the crankshaft 38. Therefore, the first engine-side securing portion 81 and the second engine-side securing portion 82 are disposed at a distance in the longitudinal and vertical directions. The fifth engine-side securing portion 85 is disposed above and rearward of the crankshaft 38 and is positioned rearward of the second engine-side securing portion 82.

A third engine-side securing portion 83, a fourth engine-side securing portion 84, and a sixth engine-side securing portion 86 are provided on the right side surface of the crankcase 39 and are portions secured to the second side frame 14, as shown in FIG. 5. The third engine-side securing portion 83 is disposed in alignment with the first engine-side securing portion 81 in the transverse direction of the vehicle body, and is disposed in symmetry with the first engine-side securing portion 81. The fourth engine-side securing portion 84 is disposed in alignment with the second engine-side securing portion 82 in the transverse direction of the vehicle body, and is disposed in symmetry with the second engine-side securing portion 82. The sixth engine-side securing portion 86 is disposed in alignment with the fifth engine-side securing portion 85 in the transverse direction of the vehicle body, and is disposed in symmetry with the fifth engine-side securing portion 85. In other words, the third engine-side securing portion 83 is disposed below and forward of the crankshaft 38, the fourth engine-side securing portion 84 is disposed above and rearward of the crankshaft 38. Therefore, the third engine-side securing portion 83 and the fourth engine-side securing portion 84 are disposed at a distance in the longitudinal and vertical directions. The sixth engine-side securing portion 86 is disposed above and rearward of the crankshaft 38 and is positioned rearward of the fourth engine-side securing portion 84.

The power transmission unit 18 is a device for changing the speed of and transmitting the drive power from the engine 17 to the rear wheel 4, and is provided with, e.g., a belt-type continuously variable transmission. The power transmission unit 18 is mounted on the left side surface of the rear portion of the engine 17, and is capable of pivoting about a rotating shaft 46 in relation to the engine 17, as shown in FIG. 4. In FIG. 4, the rotating shaft 46 is disposed at a distance from the crankshaft 38, but the rotational centers of the rotating shaft 46 and the crankshaft 38 may be in alignment.

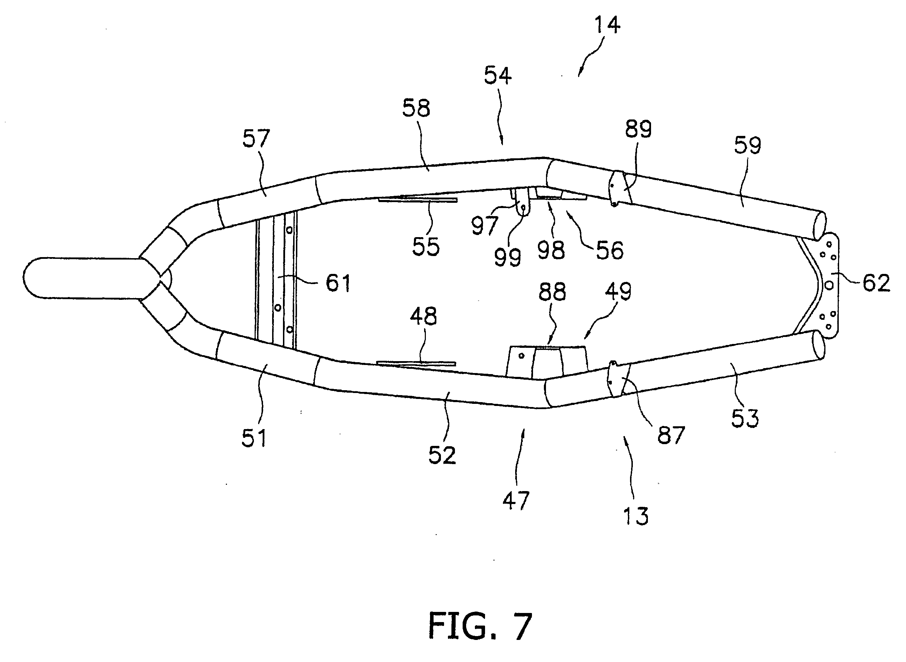

Next, the first side frame 13 and the second side frame 14 to which the engine 17 is secured will be described with reference to FIGS. 6 and 7. FIGS. 6 and 7 are a perspective view and a plan view of the first side frame 13 and the second side frame 14, respectively.

The first side frame 13 has a first side frame body 47, a first bracket 48, and a second bracket 49.

The first side frame body 47 is a pipe-shaped member that passes from the lower end portion of the front frame 12 and below the footboard 25 (see FIG. 2), and extends from the vicinity of the rear section of the footboard 25 in the rearward and upward direction to the upper rear portion of the vehicle body. The first side frame body 47 has a first portion 51, a second portion 52, and a third portion 53 in the stated order from the front side, these portions being integrally formed. The first portion 51 is positioned below the footboard 25. The front end of the first portion 51 is connected to the front frame 12. The second portion 52 is connected to the rear end of the first portion 51 and extends (see FIG. 2) diagonally rearward and upward from the vicinity of the rear portion of the footboard 25. The third portion 53 is connected to the rear end of the second portion 52, and extends diagonally rearward and upward from the vicinity of the rear portion of the second portion 52. The first side frame body 47 is curve-shaped between the first portion 51 and the second portion 52, and between the second portion 52 and the third portion 53 as viewed from the side, as shown in FIG. 2.

The first bracket 48 protrudes from the first side frame body 47 and is a plate-shaped part to which the first engine-side securing portion 81 is secured. The second bracket 49 protrudes from the first side frame body 47 and is a plate-shaped part to which the second engine-side securing portion 82 and the fifth engine-side securing portion 85 are secured. The first bracket 48 is disposed further forward of the second bracket 49 and is mounted on the second portion 52 of the first side frame body 47. The first bracket 48 protrudes diagonally downward in the rearward direction from the second portion 52. A first frame-side securing portion 91 is provided on a distal end of the first bracket 48. The first frame-side securing portion 91 is secured to the first engine-side securing portion 81 (see FIG. 4) of the engine 17 using a bolt or other securing means.

The second bracket 49 is disposed further rearward of the first bracket 48 and is mounted on the second portion 52 of the first side frame body 47. The second bracket 49 protrudes diagonally downward and rearward from the second portion 52. A second frame-side securing portion 92 and a fifth frame-side securing portion 95 are provided on the second bracket 49. The second frame-side securing portion 92 is secured to the second engine-side securing portion 82 (see FIG. 4) of the engine 17 using a bolt or other securing means. The fifth frame-side securing portion 95 is disposed rearward of the second frame-side securing portion 92, is secured to the fifth engine-side securing portion 85 (see FIG. 4) of the engine 17 using a bolt or other securing means. The second bracket 49 has a curved shape, and the distal end portion of the second bracket 49 is a first vertical surface portion 88 that extends in the perpendicular direction further inward than the first side frame body 47, as shown in FIG. 7. The second frame-side securing portion 92 and the fifth frame-side securing portion 95 are provided on the first vertical surface portion 88.

As described above, the first frame-side securing portion 91 is provided on the first bracket 48, and the second frame-side securing portion 92 and the fifth frame-side securing portion 95 are provided on the second bracket 49. The first frame-side securing portion 91, the second frame-side securing portion 92, and the fifth frame-side securing portion 95 are thereby provided in positions in which the second bracket 49 is not superimposed on the first side frame body 47 as viewed from the side.

The second side frame 14 has a second side frame body 54, a third bracket 55, and a fourth bracket 56, as shown in FIGS. 6 and 7.

The second side frame body 54 has a shape that is substantially symmetric to the first side frame body 47, and is disposed in alignment with the first side frame body 47 in the transverse direction of the vehicle body. The second side frame 14 has a fourth portion 57, a fifth portion 58, and a sixth portion 59 in the stated order from the front side, these portions being integrally formed. The fourth portion 57, the fifth portion 58, and the sixth portion 59 correspond to the first portion 51, the second portion 52, and the third portion 53, respectively, of the first side frame body 47.

The first portion 51 and the fourth portion 57 are disposed so that the distance between the first portion 51 and the fourth portion 57 in the transverse direction of the vehicle body increases in the rearward direction, as shown in FIG. 7. The first portion 51 and the fourth portion 57 are connected by a first connection member 61. The first connection member 61 is positioned below the footboard 25 and has a shape that extends in the transverse direction of the vehicle body. The second portion 52 and the fifth portion 58 are curved so as to bulge outward as viewed from above. The third portion 53 and the sixth portion 59 are disposed so that the distance between the third portion 53 and the sixth portion 59 in the transverse direction of the vehicle body decreases in the rearward direction. The third portion 53 and the sixth portion 59 are connected by a second connection member 62. The second connection member 62 has a shape extending in the transverse direction of the vehicle body and is connected to the rear end of the third portion 53 and the rear end of the sixth portion 59.

The third bracket 55 protrudes from the second side frame body 54 and is a plate-shaped portion to which the third engine-side securing portion 83 is secured. The third bracket 55 is disposed in alignment with the first bracket 48 in the transverse direction of the vehicle body, and is disposed substantially symmetrically with respect to the first bracket 48. The third bracket 55 is mounted on the fifth portion 58 of the second side frame 14. A third frame-side securing portion 93 is provided on the third bracket 55, as shown in FIG. 6. The third frame-side securing portion 93 is disposed in alignment with the first frame-side securing portion 91 in the transverse direction of the vehicle body, and is secured to the third engine-side securing portion 83 (see FIG. 5).

The fourth bracket 56 protrudes from the second side frame body 54 and is a plate-shaped part to which the fourth engine-side securing portion 84 and the sixth engine-side securing portion 86 are secured. The fourth bracket 56 is disposed in alignment with the second bracket 49 in the transverse direction of the vehicle body and is mounted on the fifth portion 58 of the second side frame 14. A fourth frame-side securing portion 94 and a sixth frame-side securing portion 96 are provided on the fourth bracket 56. The fourth frame-side securing portion 94 is disposed in alignment with the second frame-side securing portion 92 (see FIG. 2) in the transverse direction of the vehicle body and is secured to the fourth engine-side securing portion 84 (see FIG. 5). The sixth frame-side securing portion 96 is disposed in alignment with the fifth frame-side securing portion 95 in the transverse direction of the vehicle body and is secured to the sixth engine-side securing portion 86. The fourth bracket 56 has a curved shape, and the distal end portion of the fourth bracket 56 is a second vertical surface portion 98 that extends in the perpendicular direction further inward than the second side frame body 54, as shown in FIG. 7. The fourth frame-side securing portion 94 and the sixth frame-side securing portion 96 are provided on the second vertical surface portion 98. A tongue 97 protruding inward is provided on the fourth bracket 56. A storage box-securing portion 99 is provided on the tongue 97. The storage box 31 is secured to the storage box-securing portion 99 using a bolt or other securing means.

As described above, the third frame-side securing portion 93 is provided on the third bracket 55, and the fourth frame-side securing portion 94 and the sixth frame-side securing portion 96 are provided on the fourth bracket 56. The third frame-side securing portion 93, the fourth frame-side securing portion 94, and the sixth frame-side securing portion 96 are thereby provided in a position that is not superimposed on the second side frame body 54 as viewed from the side.

As described above, the engine 17 is secured to the vehicle frame 2 in the first to sixth frame-side securing portion 91 to 96 and is thereby mounted so as to be incapable of pivoting in relation to the vehicle frame 2.

With this motorcycle 1, the vehicle frame 2 can be divided into a front portion that is further forward from the footboard 25, a rear portion further rearward from the footboard 25, and an intermediate portion that passes below the footboard 25. The front portion includes the head pipe 11 and the front frame 12. The intermediate portion includes the first portion 51 of the first side frame 13, the fourth portion 57 of the second side frame 14, and the first connection member 61. The rear portion includes the second portion 52 and the third portion 53 of the first side frame 13, the fifth portion 58 and the sixth portion 59 of the second side frame 14, and the second connection member 62. The front portion and the rear portion are connected only by the intermediate portion.

A first tank bracket 87 is provided on the third portion 53 of the first side frame 13, as shown in FIGS. 6 and 7. A second tank bracket 89 is provided on the sixth portion 59 of the second side frame 14. The fuel tank 35 (see FIG. 2) is secured to the first tank bracket 87 and the second tank bracket 89.

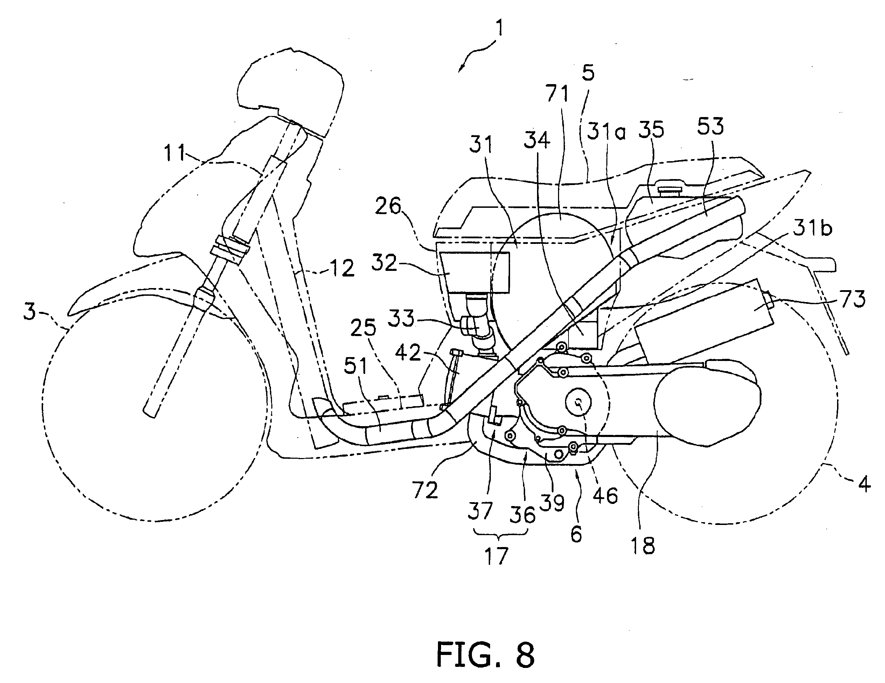

Next, the arrangement of the storage box 31, the air cleaner 32, the intake channel 33, the battery 34, and the fuel tank 35 will be described with reference to FIGS. 8 to 10. FIGS. 8 to 10 are a side view, a plan view, and a front view, respectively, showing the internal structure of the motorcycle 1. In FIGS. 8 to 10, a portion of the configuration of the first bracket 48, the second bracket 49, and the like shown in FIG. 2 is omitted in order to facilitate understanding.

The storage box 31 is a portion for storing articles, and has a helmet storage section 31a that can accommodate a full-face helmet 71, and a battery storage section 31b that can accommodate a battery 34. As used herein, the term "full-face" refers to a shape that can cover the head and jaw. The battery accommodation section 31b is disposed below the helmet accommodation section 31a and is positioned between the helmet accommodation section 31a and the engine 17. The upper surface of the battery accommodation section 31b is closed by a lid member (not shown), and the lid member constitutes a portion of the bottom surface of the helmet accommodation section 31a. The storage box 31 is disposed below the seat 5 and above the engine 17. The bottom surface of the storage box 31 is formed substantially horizontal so as to conform to the upper surface of the engine 17. The storage box 31 is disposed rearward of the air cleaner 32 and above the crankcase 39. More specifically, the storage box 31 is positioned above the pivot center of the power transmission unit 18 in relation to the engine 17; i.e., above the rotating shaft 46. The front end of the bottom surface of the storage box 31 is positioned further forward than the rotating shaft 46. The rear end of the bottom surface of the storage box 31 is positioned further forward than the center of rotation of the rear wheel 4 and further below the top part of the rear wheel 4. The upper surface of the storage box 31 can be opened and closed by the seat 5.

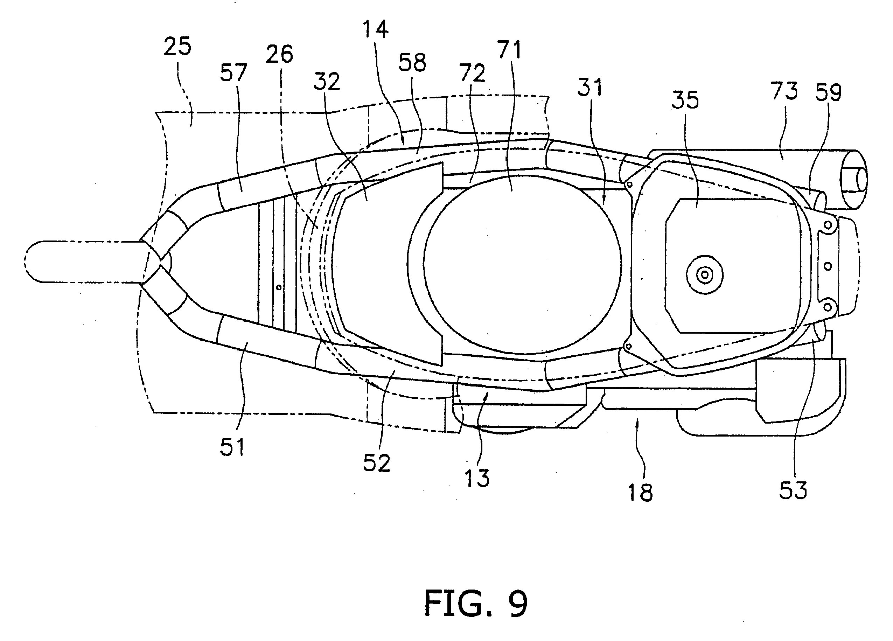

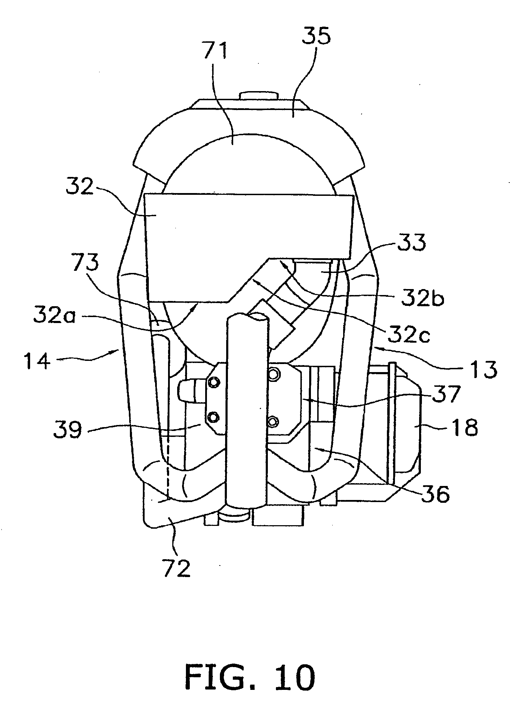

The air cleaner 32 is connected to an intake port of the engine 17 via the intake channel 33 and cleans the air to be delivered to the combustion chamber inside the engine 17. The air cleaner 32 is disposed in alignment with the storage box 31 in the longitudinal direction under the seat 5. The air cleaner 32 is disposed forward of the storage box 31 and is positioned between the side cover 26 and the storage box 31. The air cleaner 32 is disposed above the cylinder 37. The front surface of the air cleaner 32 has a curved shape that corresponds to the shape of the side cover 26, as shown in FIG. 9. The rear surface of the air cleaner 32 has a forwardly convex curved shape that corresponds to the shape of the front portion of the storage box 31. The upper surface of the air cleaner 32 has a substantially flat shape. The lower surface of the air cleaner 32 has different heights at a right-side portion 32a and a left-side portion 32b, and a step portion 32c is formed in the midsection in the transverse direction of the vehicle body, as shown in FIG. 10. Here, the left-side portion 32b of the lower surface of the air cleaner 32 is positioned further upward than the right-side portion 32a. However, the right-side portion 32a may be not positioned further upward than the left-side portion 32b in response to the arrangement of the intake channel 33.

The intake channel 33 is a pipe that connects the air cleaner 32 and the cylinder head 42 and sends air cleaned in the air cleaner 32 to the combustion chamber. The intake channel 33 is disposed below the air cleaner 32 and is disposed so as to be superimposed on the air cleaner 32 in a planar view. The intake channel 33 is connected to the left-side portion 32b of the lower surface of the air cleaner 32, and the intake channel 33 is disposed so as to slope in the transverse direction of the vehicle body as viewed from the front, as shown in FIG. 10.

An exhaust channel 72 is connected to the cylinder head 42, as shown in FIG. 8. The exhaust channel 72 is a pipe that connects the cylinder head 42 and the muffler 73, and exhaust gas discharged from the combustion chamber is sent to a muffler 73. The muffler 73 is disposed on the side of the rear wheel 4 opposite from the power transmission unit 18, and the exhaust channel 72 extends from the lower portion of the engine 17 to the muffler 73 via the side of the engine 17.

The battery 34 is stored in the battery storage section 31b of the storage box 31 described above and is disposed above the crankcase 39 of the engine 17.

The fuel tank 35 is disposed rearward of the storage box 31 and below the seat 5. The fuel tank 35 is positioned above the rear wheel 4. The fuel tank 35 is disposed between the third portion 53 of the first side frame 13 and the sixth portion 59 of the second side frame 14, as shown in FIG. 9.

### (Characteristics)

In the motorcycle 1, the storage box 31 is positioned above the pivot center of the power transmission unit 18 in relation to the engine 17; i.e., above the rotating shaft 46. The engine 17 is non-pivotably secured to the vehicle frame 2. Accordingly, the storage box 31 can be provided in a low position so as to be close to the engine 17 without the need to consider the movable range of the engine 17. The engine 17 is disposed so that the cylinder axis line is substantially horizontal (see the alternately-long-and-short-dashed line X1 of FIG. 3). Accordingly, a large space can be obtained between the engine 17 and the seat 5. In accordance with a structure such as that described above, the capacity of the storage box 31 can be made larger even when the motorcycle 1 is provided with a large-diameter front wheel 3 and rear wheel 4, and a flat footboard 25. Both the running characteristics and mounting/dismounting characteristics can thereby be achieved and a large-capacity storage space can be obtained below the seat 5.

The air cleaner 32 is disposed in alignment with the storage box 31 in the longitudinal direction. Accordingly, it is possible to avoid a larger vehicle body in the transverse direction of the vehicle body. It is also possible to avoid a larger vehicle body in the longitudinal direction because the storage box 31 is disposed above the engine 17. Also, the storage box 31 can be provided in a low position so as to be close to the engine 17 as described above. Accordingly, with this motorcycle 1, it is possible to increase the capacity of the storage box 31 and to avoid a larger vehicle body in the height direction. As described above, with this motorcycle 1, the capacity of the storage box 31 can be increased and a larger vehicle body can be avoided.

The air cleaner 32 is disposed above the cylinder 37. In other words, the air cleaner 32 is disposed in the front side space of the space above the engine 17. Accordingly, the space above the engine 17 can be used effectively. For this reason, the capacity of the storage box 31 and the air cleaner 32 can be assured while avoiding a larger vehicle body.

The storage box 31 is disposed above the crankcase 39. For this reason, the intake channel 33 is provided between the air cleaner 32 and the cylinder 37 without the need to have the intake channel 33 pass between the storage box 31 and the crankcase 39. The bottom portion of the storage box 31 can thereby be disposed in a low position near the engine 17.

The air cleaner 32 is disposed above the cylinder 37 and the intake channel 33 connecting the air cleaner 32 and the cylinder 37 slopes in the transverse direction of the vehicle body. Accordingly, the length of the pathway of the intake channel 33 can be extended without increasing the height position of the seat 5. The intake channel 33 is disposed so as to be superimposed on the air cleaner 32 in a planar view. Therefore, it is possible to avoid a larger vehicle body in the longitudinal direction while assuring the capacity of the storage box 31 and the air cleaner 32.

The battery 34 is disposed above the engine 17. Heavy items can thus be disposed in the center area of the vehicle body. The capacity of the storage box 31 can be assured by disposing the battery 34 in a low position.

The rear end of the storage box 31 is positioned further forward than the center of rotation of the rear wheel 4 and further below the top part of the rear wheel. As a result, the capacity of the storage box 31 can be increased and it is possible to avoid a larger vehicle body.

In the motorcycle 1, a fuel tank 35 is disposed below the seat 5 and rearward of the storage box 31. In the case that the storage box 31 is disposed at the rear part of the vehicle body, the shape of the storage box 31 is limited in order to avoid interference with the rear wheel 4. However, it is difficult to assure freedom in the shape of the storage box 31 due to the relationship between the articles stored in the storage box. In the motorcycle 1, a fuel tank 35 with few shape restrictions is disposed rearward of the storage box 31; therefore, it is possible to avoid a larger vehicle body in the longitudinal direction and in the transverse direction of the vehicle body while assuring the capacity of the storage box 31 and the fuel tank 35.

The battery storage section 31b is provided below the helmet storage section 31a and above the engine 17. Accordingly, it is possible to effectively use the space between the engine 17 and the helmet storage section 31a.

The bottom portion of the storage box 31 has a shape that conforms to the upper surface of the engine 17. Accordingly, the bottom portion of the storage box 31 can be disposed in a low position near the engine 17, and the space can be used in an effective manner.

In this motorcycle 1, the engine 17, the storage box 31, the air cleaner 32, the intake channel 33, the battery 34, and the fuel tank 35 are all disposed below the seat 5 and rearward of the side cover 26, as described above. Accordingly, the side cover 26 can be formed in a shape that extends downward from the front portion of the seat 5 without the need to provide a shape that protrudes considerably forward from the seat 5 in order to provide space for storing these components. The footboard 25 can therefore be made substantially flat. Accordingly, mounting and dismounting can be facilitated without the need for the driver to lift his/her feet a great distance when mounting and dismounting.

### <Second embodiment>

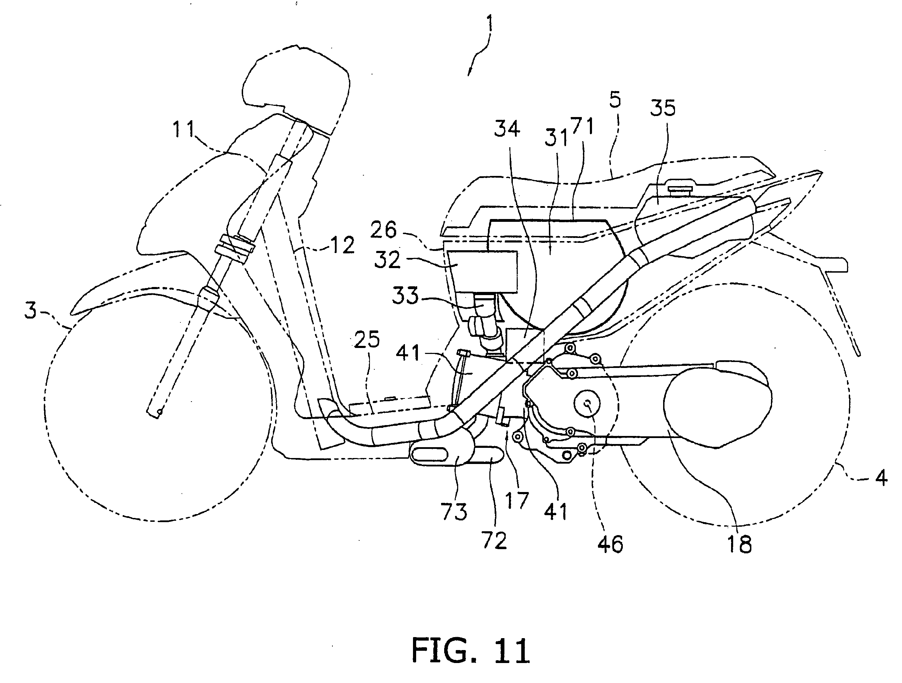

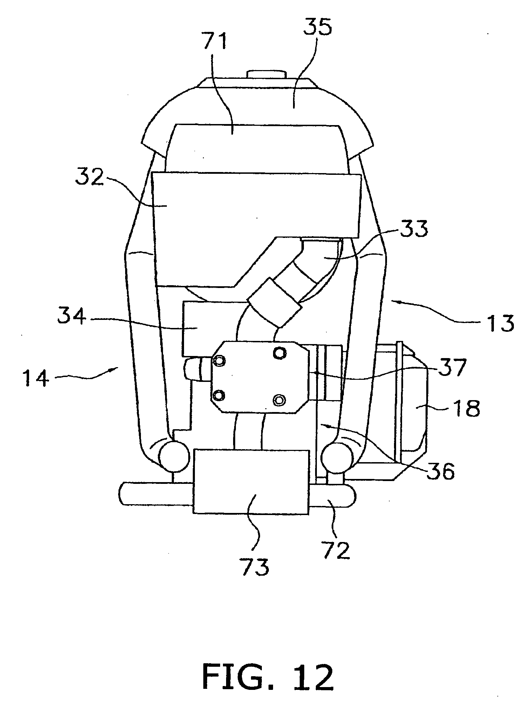

The motorcycle 1 according to the second embodiment of the present invention is shown in FIGS. 11 and 12. FIG. 11 is a side view showing a portion of the internal structure of the motorcycle 1. FIG. 12 is a front view showing a portion of the internal structure of the motorcycle 1.

In this motorcycle 1, the muffler 73 is disposed below the footboard 25 and forward of the engine 17. The battery 34 is disposed between the storage box 31 and the engine 17 and is positioned above the cylinder block 41. The battery 34 is disposed off-center further to the right side from the center of the vehicle body in the transverse direction of the vehicle body, as shown in FIG. 12.

The configuration is otherwise the same as the motorcycle 1 according to the first embodiment.

In the motorcycle 1, the muffler 73 does not pivot in relation to the vehicle body, in the same manner as the cylinder 37 of the engine 17. Accordingly, the muffler 73 can be disposed below the footboard 25 without increasing the height position of the footboard 25. Therefore, the muffler 73 is disposed in the manner described above, whereby it is possible to avoid a larger vehicle body in the transverse direction of the vehicle body.

### <Third embodiment>

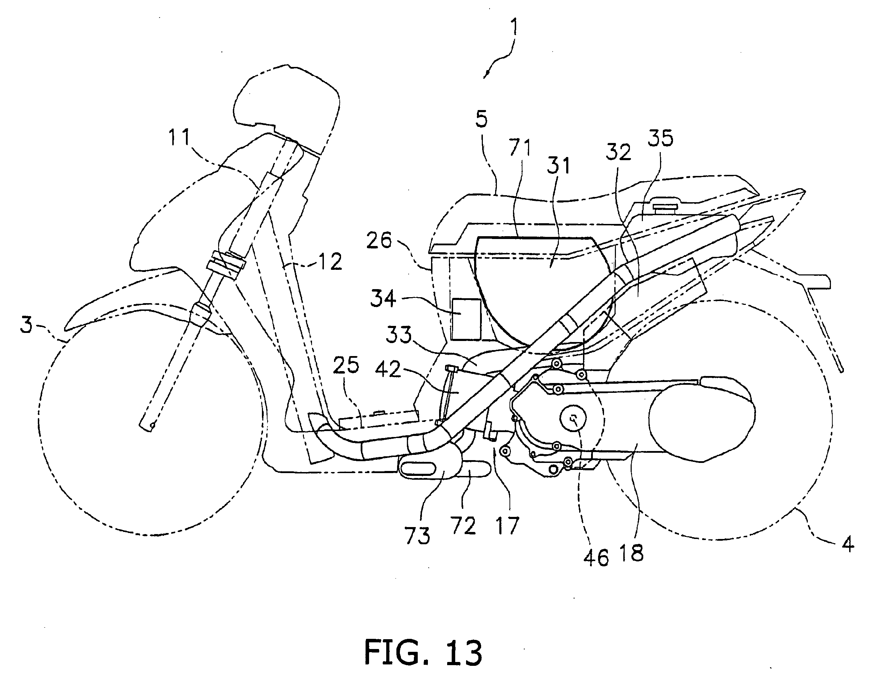

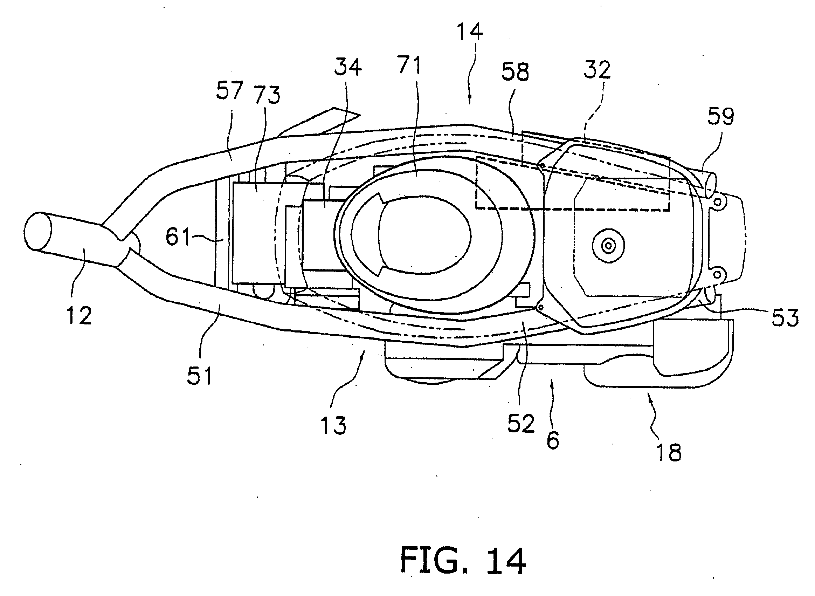

The motorcycle 1 according to the third embodiment of the present invention is shown in FIGS. 13 and 14. FIGS. 13 and 14 are a side view and a plan view, respectively, showing a portion of the internal structure of the motorcycle 1.

In this motorcycle 1, the air cleaner 32 is disposed rearward of the storage box 31. The air cleaner 32 is disposed below the fifth portion 58 and the sixth portion 59 of the second side frame 14, and is disposed so as to be superimposed on the second side frame 14 in a planar view, as shown in FIG. 14.

The intake channel 33 extends from the cylinder head 42, passes between the engine 17 and the storage box 31, and extends to the air cleaner 32.

The battery 34 is disposed between the seat 5 and the engine 17 and is disposed above the cylinder head 42. The battery 34 is disposed forward of the storage box 31 and rearward of the side cover 26.

The muffler 73 is disposed below the footboard 25 and forward of the engine 17.

The configuration is otherwise the same as the motorcycle 1 according to the first embodiment.

In the motorcycle 1, the air cleaner 32 is disposed rearward of the storage box 31, and the battery 34 is disposed forward of the storage box 31. Therefore, the capacity of the storage box 31 can be increased while avoiding a larger vehicle body.

Since the air cleaner 32 does not pivot vertically, the size of the vehicle body is not increased in the vertical direction even though the air cleaner 32 is disposed so as to be superimposed on the second side frame 14 in a planar view. The air cleaner 32 is disposed so as to be superimposed on the second side frame 14, whereby the vehicle body can be prevented from being made larger in the transverse direction.

### <Fourth embodiment>

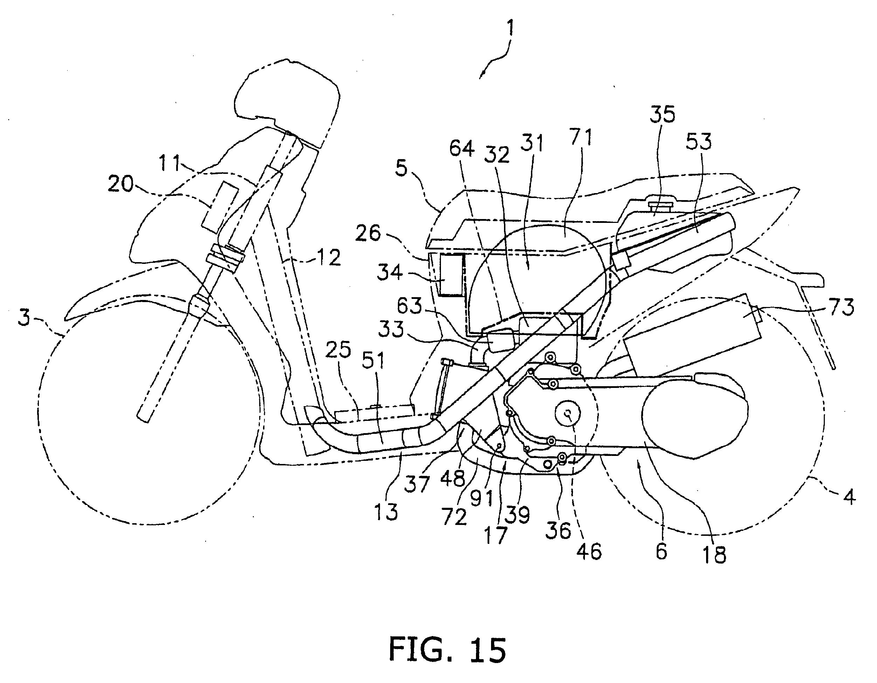

FIG. 15 is a side view showing the motorcycle 1 according to the fourth embodiment of the present invention. In the motorcycle 1, the air cleaner 32 is disposed between the storage box 31 and the engine 17. A throttle valve 63 provided on the intake channel 33 is disposed forward of the air cleaner 32. A portion of the bottom surface of the storage box 31 has an upwardly bulging shape, and the air cleaner 32 and the throttle valve 63 are disposed below the bulging portion (hereinbelow referred to as "bulging portion 64"). In the case that a full-face or jet-type helmet 71 is to be stored away, the helmet 71 is disposed so that the bulging portion 64 enters the opening of the bottom portion of the helmet 71, whereby the helmet 71 is stored in the storage box 31. The battery 34 is disposed forward of the storage box 31. The battery 34 is positioned between the side cover 26 and the storage box 31. The configuration is otherwise the same as the motorcycle 1 according to the first embodiment. In FIG. 15, a portion of the configuration of the second bracket 49 and the like are not shown.

In this motorcycle 1, the air cleaner 32 is disposed below the storage box 31 and the battery 34 is disposed forward of the storage box 31. Accordingly, it is possible to prevent the vehicle body from increasing in size in the transverse direction. The bulging portion 64 is provided on the storage box 31 whereby space for disposing the air cleaner 32 is provided below the storage box 31. It is therefore possible to avoid increasing the height of the position of the seat 5. The bulging portion 64 is disposed in a position so as to enter into the opening of the helmet 71 in the case that the helmet 71 has been stored in the storage box 31. Accordingly, a full-face helmet 71 can be stored in the storage box 31 even if the capacity inside the storage box 31 is reduced by providing the bulging portion 64.

### <Other embodiments>

(a) The structure for securing the engine 17 and the vehicle frame 2 is not limited to the description above, and a structure is possible in which the engine 17 is non-pivotably secured to the vehicle frame 2.

(b) In the embodiments described above, the upper surface of the footboard 25 has a flat shape, but the footboard 25 may have a bulging shape as long as the height of the bulge is 5 cm or less.

(c) In the first and fourth embodiments described above, the muffler 73 is disposed on the side of the rear wheel 4, but may be disposed below the footboard 25 as described in the second and third embodiments. In the second and third embodiments, the muffler 73 may be disposed on the side of the rear wheel 4 in the same manner as in the first embodiment.

(d) In the embodiments described above, the wheel outside diameter D1 of the rear wheel 4 is 14 inches, but may also be 14 inches or more.

### INDUSTRIAL APPLICABILITY

The present invention can increase the capacity of a storage box, can prevent a larger vehicle body, and is useful as a motorcycle.[Reference Numerals List]
- 1: Motorcycle
- 2: Vehicle frame
- 3: Front wheel
- 4: Rear wheel
- 5: Seat
- 17: Engine
- 18: Power transmission unit
- 25: Footboard
- 26: Side cover (Cover member)
- 31: Storage box
- 31a: Helmet storage section
- 31b: Battery storage section
- 32: Air cleaner
- 33: Intake channel
- 34: Battery
- 35: Fuel tank
- 37: Cylinder portion
- 38: Crankshaft
- 39: Crankcase
- 43: Cylinder
- 71: Helmet
- 73: Muffler

## Claims

1. A motorcycle comprising:
a seat (5);
a footboard (25)disposed forward of and below the seat (5) ;
a cover member (26) for covering an area between the seat (5) and the footboard (25), the cover member (26) extending downward from the seat (5);
a vehicle frame (2) for supporting the seat (5), the footboard (25), and the cover member (26);
a front wheel (3) and a rear wheel (4);
the rear wheel (4) having a wheel outside diameter of 35,5 cm (14 inches) or more;
an engine (17) disposed below the seat (5) and secured to the vehicle frame (2);
a power transmission unit (18) provided with a continuously variable transmission for shifting gears and transmitting drive power from the engine (17) to the rear wheel (4), the power transmission unit (18) being capable of pivoting in relation to the engine (17) and the vehicle frame (2);
a storage box (31) disposed below the seat (5) and above the center about which the power transmission unit (18) pivots in relation to the engine (17); and
an air cleaner (32) connected to the engine (17);
wherein an extension of a cylinder axis line (X1) of the engine (17) is disposed so as to pass over the front wheel (3) as viewed from the side,
**characterized in that**
the footboard (25) is provided across the transverse direction of the vehicle body and an upper surface of the footboard (25) is formed in a substantially flat manner in the transverse direction of the vehicle body or a bulging shape with a height of 5 cm or less; and
the air cleaner (32) is disposed below the seat (5) in alignment with the storage box (31) in the longitudinal direction, or is disposed between the storage box (31) and the engine (17).

2. The motorcycle as recited in claim 1, wherein the air cleaner (32) is disposed below the seat (5) in alignment with the storage box (31) in the longitudinal direction, and wherein the air cleaner (32) is disposed behind the storage box (31) or over the vehicle frame (2) in a planar view or above a cylinder (43) of the engine (17).

3. The motorcycle as recited in claim 2, wherein the air cleaner (32) is disposed above a cylinder (43) of the engine (17) and the storage box (31) is disposed rearward of the air cleaner (32) and above a crankcase (39) of the engine (17).

4. The motorcycle as recited in claim 2, wherein the air cleaner (32) is disposed above a cylinder (43) of the engine (17), the motorcycle further comprising an intake channel (33) for connecting the air cleaner (32) and the cylinder (43), wherein the air intake channel (33) is disposed slantwise with respect to the transverse direction of the vehicle body in a planar view, or wherein the air intake channel (33) is disposed over the air cleaner (32) in a planar view.

5. The motorcycle as recited in claim 1, wherein the air cleaner (32) is disposed below the seat (5) in alignment with the storage box (31) in the longitudinal direction, and wherein the motorcycle further comprises a battery (34) disposed above the engine (17) or disposed between the storage box (31) and the engine (17).

6. The motorcycle as recited in claim 1, wherein the rear end of the storage box (31) is positioned further forward of the center of rotation of the rear wheel (4) and further below the top part of the rear wheel (4).

7. The motorcycle as recited in claim 1, further comprising a fuel tank (35) disposed below the seat (5) and behind the storage box (31).

8. The motorcycle as recited in claim 1, further comprising a muffler (73) disposed below the footboard (25) and forward of the engine (17).

9. The motorcycle as recited in claim 1, wherein the air cleaner (32) is disposed below the seat (5) in alignment with the storage box (31) in the longitudinal direction, and wherein the storage box (31) has a helmet storage section (31a) capable of storing a helmet, and a battery storage section (31b) capable of storing a battery (34), the battery storage section (31b) being disposed below the helmet storage section (31a).

10. The motorcycle as recited in claim 1, wherein the air cleaner (32) is disposed below the seat (5) in alignment with the storage box (31) in the longitudinal direction, and wherein a bottom surface of the storage box (31) is formed so as to conform to the upper surface of the engine (17).

11. The motorcycle as recited in claim 1, wherein
the vehicle frame (2) has a front portion further forward of the footboard (25), a rear portion further rearward of the footboard (25), and an intermediate portion that passes below the footboard (25); and
the front portion and the rear portion are connected only by the intermediate portion.

12. The motorcycle as recited in claim 1, wherein the engine (17) is disposed rearward of the cover member (26).

13. The motorcycle as recited in claim 1, wherein the ratio of the outside diameter of the tire of the rear wheel (4) to the seat height in the seating position of the seat (5) is 65% or more.

14. The motorcycle as recited in claim 1, wherein the air cleaner (32) is disposed between the storage box (31) and the engine (17), and wherein the motorcycle further comprises a battery (34) disposed forward of the storage box (31).

## Patentansprüche

1. Ein Motorrad, das folgende Merkmale aufweist:
einen Sitz (5);
ein Trittbrett (25), das vor und unter dem Sitz (5) angeordnet ist;
ein Abdeckungsbauglied (26) zum Abdecken eines Bereichs zwischen dem Sitz (5) und dem Trittbrett (25), wobei sich das Abdeckungsbauglied (26) von dem Sitz (5) nach unten erstreckt;
einen Fahrzeugrahmen (2) zum Tragen des Sitzes (5), des Trittbretts (25) und des Abdeckungsbauglieds (26);
ein Vorderrad (3) und ein Hinterrad (4);
wobei das Hinterrad (4) einen Radaußendurchmesser von 35,5 cm (14 Zoll) oder mehr aufweist;
einen Motor (17), der unter dem Sitz (5) angeordnet ist und an dem Fahrzeugrahmen (2) befestigt ist;
eine Leistungsgetriebeeinheit (18), die mit einem kontinuierlich veränderlichen Getriebe versehen ist zum Wechseln der Gänge und Übertragen von Antriebsleistung von dem Motor (17) zu dem Hinterrad (4), wobei sich die Leistungsgetriebeeinheit (18) in Relation zu dem Motor (17) und dem Fahrzeugrahmen (2) drehen kann;
einen Aufbewahrungskasten (31), der unter dem Sitz (5) und über der Mitte, um die sich die Leistungsgetriebeeinheit (18) in Relation zu dem Motor (17) dreht, angeordnet ist; und
ein Luftfilter (32), das mit dem Motor (17) verbunden ist;
wobei eine Erweiterung einer Zylinderachsenlinie (X1) des Motors (17) angeordnet ist, um von der Seite aus gesehen über das Vorderrad (3) zu verlaufen,
**dadurch gekennzeichnet, dass**
das Trittbrett (25) über der Querrichtung des Fahrzeugkörpers vorgesehen ist und eine obere Oberfläche des Trittbretts (25) in der Querrichtung des Fahrzeugkörpers in einer im Wesentlichen flachen Weise oder einer sich wölbenden Form mit einer Höhe von 5 cm oder weniger gebildet ist; und
das Luftfilter (32) unter dem Sitz (5) in Ausrichtung mit dem Aufbewahrungskasten (31) in der Längsrichtung angeordnet ist, oder zwischen dem Aufbewahrungskasten (31) und dem Motor (17) angeordnet ist.

2. Das Motorrad gemäß Anspruch 1, bei dem das Luftfilter (32) unter dem Sitz (5) in Ausrichtung mit dem Aufbewahrungskasten (31) in der Längsrichtung angeordnet ist, und wobei das Luftfilter (32) hinter dem Aufbewahrungskasten (31) oder über dem Fahrzeugrahmen (2) in einer planaren Ansicht oder über einem Zylinder (43) des Motors (17) angeordnet ist.

3. Das Motorrad gemäß Anspruch 2, bei dem das Luftfilter (32) über einem Zylinder (43) des Motors (17) angeordnet ist und der Aufbewahrungskasten (31) hinter dem Luftfilter (32) und über einem Kurbelgehäuse (39) des Motors (17) angeordnet ist.

4. Das Motorrad gemäß Anspruch 2, bei dem das Luftfilter (32) über einem Zylinder (43) des Motors (17) angeordnet ist, wobei das Motorrad ferner einen Aufnahmekanal (33) aufweist zum Verbinden des Luftfilters (32) und des Zylinders (43), wobei der Luftaufnahmekanal (33) in Bezug auf die Querrichtung des Fahrzeugkörpers in einer planaren Ansicht schräg angeordnet ist, oder wobei der Luftaufnahmekanal (33) in einer planaren Ansicht über dem Luftfilter (32) angeordnet ist.

5. Das Motorrad gemäß Anspruch 1, bei dem das Luftfilter (32) unter dem Sitz (5) in Ausrichtung mit dem Aufbewahrungskasten (31) in der Längsrichtung angeordnet ist, und wobei das Motorrad ferner eine Batterie (34) aufweist, die über dem Motor (17) angeordnet ist oder zwischen dem Aufbewahrungskasten (31) und dem Motor (17) angeordnet ist.

6. Das Motorrad gemäß Anspruch 1, bei dem das hintere Ende des Aufbewahrungskastens (31) weiter vor der Drehachse des Hinterrads (4) und weiter unter dem oberen Teil des Hinterrads (4) angeordnet ist.

7. Das Motorrad gemäß Anspruch 1, das ferner einen Kraftstofftank (35) aufweist, der unter dem Sitz (5) und hinter dem Aufbewahrungskasten (31) angeordnet ist.

8. Das Motorrad gemäß Anspruch 1, das ferner einen Schalldämpfer (73) aufweist, der unter dem Trittbrett (25) und vor dem Motor (17) angeordnet ist.

9. Das Motorrad gemäß Anspruch 1, bei dem das Luftfilter (32) unter dem Sitz (5) in Ausrichtung mit dem Aufbewahrungskasten (31) in der Längsrichtung angeordnet ist, und wobei der Aufbewahrungskasten (31) einen Helmaufbewahrungsabschnitt (31a) aufweist, der einen Helm aufnehmen kann, und einen Batterieaufbewahrungsabschnitt (31 b), der eine Batterie (34) aufnehmen kann, wobei der Batterieaufbewahrungsabschnitt (31 b) unter dem Helmaufbewahrungsabschnitt (31 a) angeordnet ist.

10. Das Motorrad gemäß Anspruch 1, bei dem das Luftfilter (32) unter dem Sitz (5) in Ausrichtung mit dem Aufbewahrungskasten (31) in der Längsrichtung angeordnet ist, und wobei eine Unteroberfläche des Aufbewahrungskastens (31) gebildet ist, um sich an die obere Oberfläche des Motors (17) anzupassen.

11. Das Motorrad gemäß Anspruch 1, bei dem
der Fahrzeugrahmen (2) einen Vorderabschnitt weiter vor dem Trittbrett (25), einen hinteren Abschnitt weiter hinter dem Trittbrett (25) und einen Zwischenabschnitt aufweist, der unter dem Trittbrett (25) verläuft; und
der Vorderabschnitt und der Hinterabschnitt nur durch den Zwischenabschnitt verbunden sind.

12. Das Motorrad gemäß Anspruch 1, bei dem der Motor (17) hinter dem Abdeckungsbauglied (26) angeordnet ist.

13. Das Motorrad gemäß Anspruch 1, bei dem das Verhältnis des Außendurchmessers des Reifens des Hinterrads (4) zu der Sitzhöhe in der Sitzposition des Sitzes (5) 65 % oder mehr beträgt.

14. Das Motorrad gemäß Anspruch 1, bei dem das Luftfilter (32) zwischen dem Aufbewahrungskasten (31) und dem Motor (17) angeordnet ist, und wobei das Motorrad ferner eine Batterie (34) aufweist, die vor dem Aufbewahrungskasten (31) angeordnet ist.

## Revendications

1. Motocyclette comprenant:
un siège (5);
un marchepied (25) disposé à l'avant et au-dessous du siège (5);
un élément de couvercle (26) destiné à recouvrir une zone entre le siège (5) et le marchepied (25), l'élément de couvercle (26) s'étendant vers le bas depuis le siège (5);
un châssis de véhicule (2) destiné à supporter le siège (5), le marchepied (25) et l'élément de couvercle (26);
une roue avant (3) et une roue arrière (4);
la roue avant (4) présentant un diamètre extérieur de roue de 35,5 cm (14 pouces) ou plus;
un moteur (17) disposé au-dessous du siège (5) et fixé au châssis de véhicule (2);
une unité de transmission de puissance (18) pourvue d'une transmission variable en continu pour le changement de vitesses et la transmission de puissance d'entraînement du moteur (17) à la roue arrière (4), l'unité de transmission de puissance (18) étant à même de pivoter par rapport au moteur (17) et au châssis de véhicule (2);
un boîtier de stockage (31) disposé au-dessous du siège (5) et au-dessus du centre autour duquel l'unité de transmission de puissance (18) pivote par rapport au moteur (17); et
un purificateur d'air (32) connecté au moteur (17);
dans laquelle une extension de la ligne d'axe de cylindre (X1) du moteur (17) est disposée de manière à passer au-dessus de la roue avant (3), vu du côté,
**caractérisée par le fait que**
le marchepied (25) est prévu dans la direction transversale de la carrosserie de véhicule et une surface supérieure du marchepied (25) est formée de manière sensiblement plane dans la direction transversale de la carrosserie de véhicule ou de forme bombée avec une hauteur de 5 cm ou moins; et
le purificateur d'air est disposé (32) au-dessous du siège (5) de manière alignée avec le boîtier de stockage (31) dans la direction longitudinale, ou est disposé entre le boîtier de stockage (31) et le moteur (17).

2. Motocyclette selon la revendication 1, dans laquelle le purificateur d'air (32) est disposé au-dessous du siège (5) de manière alignée avec le boîtier de stockage (31) dans la direction longitudinale, et dans laquelle le purificateur d'air (32) est disposé derrière le boîtier de stockage (31) ou sur le châssis de véhicule (2), en vue en plan, ou au-dessus d'un cylindre (43) du moteur (17).

3. Motocyclette selon la revendication 2, dans laquelle le purificateur d'air (32) est disposé au-dessus d'un cylindre (43) du moteur (17) et le boîtier de stockage (31) est disposé à l'arrière du purificateur d'air (32) et au-dessus d'un carter (39) du moteur (17).

4. Motocyclette selon la revendication 2, dans laquelle le purificateur d'air (32) est disposé au-dessus d'un cylindre (43) du moteur (17), la motocyclette comprenant par ailleurs un canal d'entrée (33) pour connecter le purificateur d'air (32) et le cylindre (43), dans laquelle le canal d'entrée d'air (33) est disposé incliné par rapport à la direction transversale de la carrosserie de véhicule, en vue en plan, ou dans laquelle le canal d'entrée d'air (33) est disposé au-dessus du purificateur d'air (32), en vue en plan.

5. Motocyclette selon la revendication 1, dans laquelle le purificateur d'air (32) est disposé au-dessous du siège (5) de manière alignée avec le boîtier de stockage (31) dans la direction longitudinale, et dans laquelle la motocyclette comprend par ailleurs une batterie (34) disposée au-dessus du moteur (17) ou disposée entre le boîtier de stockage (31) et le moteur (17).

6. Motocyclette selon la revendication 1, dans laquelle l'extrémité arrière du boîtier de stockage (31) est positionnée davantage en avant du centre de rotation de la roue arrière (4) et davantage au-dessous de la partie supérieure de la roue arrière (4).

7. Motocyclette selon la revendication 1, comprenant par ailleurs un réservoir à carburant (35) disposé au-dessous du siège (5) et derrière le boîtier de stockage (31).

8. Motocyclette selon la revendication 1, comprenant par ailleurs un silencieux (73) disposé au-dessous du marchepied (25) et à l'avant du moteur (17).

9. Motocyclette selon la revendication 1, dans laquelle le purificateur d'air (32) est disposé au-dessous du siège (5) de manière alignée avec le boîtier de stockage (31) dans la direction longitudinale, et dans laquelle le boîtier de stockage (31) présente un segment de stockage de casque (31a) à même d'entreposer un casque, et un segment de stockage de batterie (31 b) à même d'entreposer une batterie (34), le segment de stockage de batterie (31b) étant disposé au-dessous du segment de stockage de casque (31a).

10. Motocyclette selon la revendication 1, dans laquelle le purificateur d'air (32) est disposé au-dessous du siège (5) de manière alignée avec le boîtier de stockage (31) dans la direction longitudinale, et dans laquelle une surface inférieure du boîtier de stockage (31) est formée de manière à se conformer à la surface supérieure du moteur (17).

11. Motocyclette selon la revendication 1, dans laquelle
le châssis de véhicule (2) présente une partie avant davantage en avant du marchepied (25), une partie arrière davantage en arrière du marchepied (25), et une partie intermédiaire qui passe au-dessous du marchepied (25); et
la partie avant et la partie arrière sont connectées uniquement par la partie intermédiaire.

12. Motocyclette selon la revendication 1, dans lequel le moteur (17) est disposé à l'arrière de l'élément de couvercle (26).

13. Motocyclette selon la revendication 1, dans lequel le rapport entre le diamètre extérieur du pneu de la roue arrière (4) et la hauteur de siège en position assise du siège (5) est de 65% ou plus.

14. Motocyclette selon la revendication 1, dans laquelle le purificateur d'air (32) est disposé entre le boîtier de stockage (31) et le moteur (17) et dans laquelle la motocyclette comprend par ailleurs une batterie (34) disposée à l'avant du boîtier de stockage (31).
